# EUROPÄISCHE PATENTSCHRIFT

(11) **EP 2 677 857 B1**
(45) Veröffentlichungstag und Bekanntmachung des Hinweises auf die Patenterteilung: **07.01.2015**
(21) Anmeldenummer: 11705547.5
(22) Anmeldetag: 23.02.2011
(51) Int. Cl.: A01G 25/16, F16K 11/074, F16K 31/524

(54) **WASSERVERTEILER**
WATER DISTRIBUTOR
RÉPARTITEUR D'EAU

(43) Veröffentlichungstag der Anmeldung: 01.01.2014
(73) Patentinhaber: Husqvarna AB, 56182 Huskvarna (SE)
(72) Erfinder: KAUPP, Rainer, 89143 Blaubeuren (DE)
(74) Vertreter: Finkele, Rolf
(86) Internationale Anmeldenummer: PCT/EP2011/052699
(87) Internationale Veröffentlichungsnummer: WO 2012/113452

(56) Entgegenhaltungen:
- US-A- 3 642 022
- US-A- 3 924 652
- US-A- 4 125 124

## Beschreibung

Die Erfindung betrifft einen Wasserverteiler.

Zur zeitsteuerbaren Versorgung mehrerer Gartenbewässerungseinrichtungen, wie beispielsweise Viereck- oder Kreisregnern, Tropf- oder Wurzel-Bewässerungseinrichtungen oder dergleichen sind programmierbare Bewässerungscomputer in Verbindung mit Wasserverteilern bekannt. Der Wasserverteiler ist über einen Wasser-Eingangsanschluss mit dem Wasser-Ausgangsanschluss des Bewässerungscomputers verbunden und weist seinerseits mehrere Ausgänge mit jeweils einem Wasseranschluss auf. Ein Verteilerkörper ist im Gehäuse des Wasserverteilers drehbar gelagert und verbindet je nach Drehposition einen der Ausgänge wasserführend mit dem gemeinsamen Eingangsanschluss, wogegen die jeweils anderen Ausgänge gesperrt sind. Eine Fortschalteinrichtung schaltet auf ein hydraulisches Fortschaltsignal des Bewässerungscomputers den Verteilerkörper auf den nächsten Ausgang weiter. Das Fortschaltsignal des Bewässerungscomputers beinhaltet einen Druckwechsel am gemeinsamen Eingangsanschluss, insbesondere ein vorübergehendes Abschalten des Wasserzustroms durch den Bewässerungscomputer. Die Fortschalteinrichtung enthält in typischer Ausführung eine Spindel mit Wendelführung, einen in Richtung der Wendelachse in Abhängigkeit vom Wasserdruck entgegen einer Rückstellfeder verschiebbaren Kolben, welcher den Verteilerkörper bei der Drehung um die Spindelachse mitnimmt, und eine Freilaufeinrichtung. Die Wirkungsweise solcher bekannter Wasserverteiler ist allgemein bekannt.

Der Verteilerkörper kann beispielsweise einen scheibenförmigen Dichtteller mit zur Drehachse senkrechter Schiebeebene enthalten, welcher während eines Bewässerungsvorgangs durch den Wasserdruck im Verteiler axial in Richtung einer Gegenfläche des Gehäuses um die Wasserausgänge gedrückt ist und mittels einer Dichtungsanordnung zwischen Dichtteller und Gegenfläche bis auf einen aktuell zur Bewässerung angesteuerten Wasserausgang alle anderen Wasserausgänge abspent.

Die Fortschaltung des Verteilerkörpers nach dem Abschalten der Wasserzufuhr erfolgt unter mit fortschreitender Verdrehung abnehmendem Wasserdruck. Reibung zwischen Dichtungsanordnung und von dieser überfahrener Dichtfläche, das Fahren der Dichtungsanordnung über Kanten der Dichtfläche und Schmutz zwischen Dichtteller und Gegenfläche des Gehäuses können zu Schwergängigkeit der Fortschaltbewegung und zu Verschleiß, beispielsweise auch in Form von Riefenbildung und Undichtigkeiten an der Dichtungsanordnung führen.

**Aus den Patentschriften** US 3 924 A**,** US 3 642 022 A **und** US 4125124 A **sind Wasserverteiler bekannt, bei welchen die dem Verteilerkörper zugeordnete Fortschalteinrichtung mittels einer Kulissensteuerung in ihre einzelnen, diskreten Schaltstellungen gedreht wird. Hierbei ist die Kulissensteuerung jeweils derart gestaltet, dass sich die Fortschalteinrichtung in der Abfolge der einzelnen Schaltstellungen entlang einer zur Drehachse parallelen Führung bei Übergang von einer Schaltstellung zur nächsten jeweils einmal zurück und wieder vor bewegt. Die Drehachse der Fortschalteinrichtung ist hierbei in Bezug auf eine durch den Verteilerkörper abzudichtenden Gehäusefläche senkrecht angeordnet, so dass sich der fest mit der Fortschalteinrichtung gekoppelte Verteilerkörper während der einzelnen Schaltvorgänge von dieser Gehäusefläche weg und wieder auf diese zu bewegt. Da die Position des Verteilerkörpers in Bezug auf die Fortschalteinrichtung fixiert ist, muss die hierbei eingesetzte Kulissensteuerung so gestaltet werden, dass deren Ruheposition an den einzelnen Betriebswinkelstellungen in Bezug auf ihre axiale Lage immer identisch ist. Denn nur so kann eine an allen Stellen einwandfreie Abdichtung der Ausgänge gewährleistet werden.**

Der vorliegenden Erfindung liegt die Aufgabe zugrunde, bei einem solchen Wasserverteiler die vorgenannten Nachteile zu vermindern.

Die Erfindung ist im Patentanspruch 1 beschrieben. Die abhängigen Ansprüche enthalten vorteilhafte Ausgestaltungen und Weiterbildungen der Erfindung.

Die Verschiebung des Verteilerkörpers axial von der Gegenfläche weg vermindert vorteilhafterweise während der Verdrehung des Verteilerkörpers um die Drehachse während der Fortschaltung die Reibung zwischen der Dichtungsanordnung und einer relativ zu dieser verdrehbaren Dichtfläche. Vorzugsweise werden während eines Teilabschnitts der Drehbewegung einer Fortschaltung die Dichtfläche und die relativ zu dieser verdrehten Dichtungsanordnung axial vollständig voneinander getrennt.

Die die axiale Verschiebung des Verteilerkörpers relativ zu der Gegenfläche am Gehäuse bewirkenden Verschiebemittel können in erster Ausführung radial von dem von der Dichtungsanordnung überstrichenen Ring um die Drehachse getrennt liegen.

In vorteilhafter Ausführung können die Verschiebemittel innerhalb eines von der Dichtungsanordnung überstrichenen Bereichs liegen. Die Verschiebemittel sind dabei vorzugsweise bezüglich der Dichtungsanordnung, welche typischerweise aus weichem gummielastischem Material besteht, feststehend. Vorzugsweise sind die Verschiebemittel und die Dichtungsanordnung an dem relativ zum Gehäuse drehbaren Verteilerkörper angeordnet. Dabei können die Verschiebemittel insbesondere mit der Gegenfläche am Gehäuse für die axiale Relativverschiebung zusammenwirken. Die Verschiebemittel weisen vorteilhafterweise in Richtung der Relativbewegung der Fortschaltung schräge Flächen als Anlauframpen auf.

Durch die axiale Verschiebung des Verteilerkörpers wird die Reibung vermindert und bei vollständigem Abheben der Dichtungsanordnung von der Dichtfläche weitgehend aufgehoben. Bei vollständigem Abheben der Dichtungsanordnung von der Dichtfläche tritt zudem ein Reinigungseffekt der Kontaktflächen von Dichtungsanordnung und Dichtfläche auf, wenn zwischen diesem aus dem Innenraum des Wasserverteilers Wasser mit bereits reduziertem Druck in die Ausgänge strömt, so dass Schmutz zwischen den Kontaktflächen weggespült und der Verschleiß vermindert wird.

Die Erfindung ist nachfolgend anhand bevorzugter Ausführungsbeispiele unter Bezugnahme auf die Abbildungen noch eingehend veranschaulicht. Dabei zeigt:
- Fig. 1: einen Schnitt durch einen Wasserverteiler,
- Fig. 2: einen Verteilerkörper,
- Fig. 3: ein mit dem Verteilerkörper zusammenwirkendes Gehäuseteil,
- Fig. 4: das Zusammenfügen von Verteilerkörper und Gehäuseteil,
- Fig. 5: eine angehobene Zwischenstellung des Verteilerkörpers.

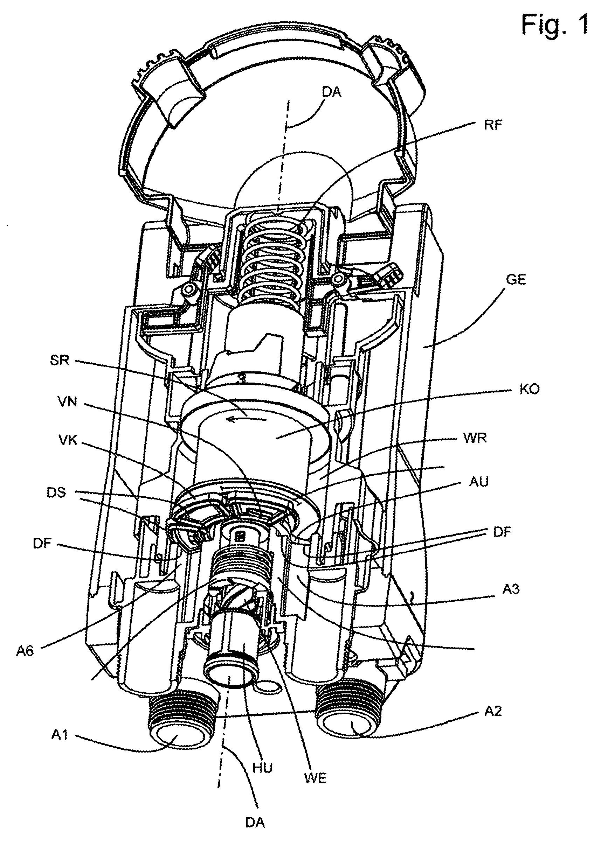

Fig. 1 zeigt in Schrägansicht einen Wasserverteiler mit einem mittig aufgeschnittenen Gehäuse GE. Der Wasserverteiler ist ausgangsseitig mit vier einzeln ansteuerbaren Wasserausgängen versehen, von welchen in Fig. 1 die Wasserausgänge A1, A2, A3 und A6 sichtbar sind. Ein für alle Wasserausgänge gemeinsamer Wassereingang des Wasserverteilers ist in Fig. 1 nicht mit dargestellt und kann beispielsweise an der dem Betrachter der Fig. 1 abgewandten Rückseite des Gehäuses angeordnet sein. In Strömungsrichtung zwischen dem nicht dargestellten Wassereingang und den mehreren Wasserausgängen liegt ein wasserführender Innenraum WR des Wasserverteilers.

Die Wasserausgänge sind als Kanäle in einem unteren Gehäuseteil GU ausgebildet. Das untere Gehäuseteil bildet um die Eingänge der Kanäle der Wasserausgänge eine Dichtfläche DF aus, welche im wesentlichen in einer senkrecht zu einer Drehachse DA liegt. Ein Verteilerkörper VK ist um die Drehachse DA in mehrere diskrete Betriebsstellungen verdrehbar. Die Zahl der diskreten Betriebsstellungen entspricht in der Regel der Zahl der Wasserausgänge. In jeder Betriebsstellung ist einer der mehreren Wasserausgänge wasserleitend mit dem wasserführenden Innenraum WR verbunden, wogegen die anderen Wasserausgänge durch den Verteilerkörper VK abgesperrt sind.

Der Verteilerkörper weist zur selektiven Verbindung eines einzelnen Wasserausgangs mit dem wasserführenden Innenraum WR um gleiche Winkelinkremente um die Drehachse DA verteilt mehrere Segmente auf, von welchen ein Segment eine Aussparung AU bildet, welche in der jeweiligen Betriebsstellung über dem aktuell ausgewählten Wasserausgang liegt. Die anderen Segmente enthalten an der der Dichtfläche axial gegenüber stehenden Unterseite des Verteilerkörpers eine Dichtungsanordnung DS, welche insbesondere je Segment eine Ringdichtung aus einem vorzugsweise gummielastischen Material aufweisen kann.

In der in Fig. 1 dargestellten Drehposition des um die Drehachse DA drehbaren Verteilerkörpers liegt die Aussparung AU über dem Wasserausgang A3, so dass Wasser vom Wassereingang des Wasserverteilers durch den Innenraum WR zu dem Wasserausgang A3 und zu einem an diesen angeschlossenen Bewässerungsgerät fließen kann. Der Verteilerkörper VK ist mittels einer Fortschalteinrichtung nach Abschluss eines Bewässerungsvorgangs an einem ausgewählten Wasserausgang in einem Fortschaltschritt in durch einen Pfeil angedeuteter Fortschaltrichtung SR um die Drehachse DA verdrehbar, um in einer anderen diskreten Betriebsstellung einen neuen Bewässerungsvorgang an einem anderen Wasserausgang durchzuführen.

Die Fortschalteinrichtung kann an sich nach dem bekannten Prinzip eines bei hohem Wasserdruck im Wasserinnenraum WR entgegen einer Rückstellfeder RF in Richtung der Drehachse DA von dem Verteilerkörper weg verschiebbaren Kolbens KO und einer mit diesem drehfest und axial verschiebbar fest gekoppelten Spindel mit einer Wendel WE sowie einer Freilaufeinrichtung FS erfolgen. Die Fortschaltung um die Drehachse DA erfolgt dabei bei Abfall des Wasserdrucks im Innenraum WR, was durch einen vorgeschalteten Bewässerungscomputer durch Absperren einer Wasserzuleitung außerhalb des Wasserverteilers eingeleitet wird. Bei Abfall des Drucks im Innenraum WR wird der Kolben KO unter der Einwirkung der Rückstellfeder RF in die in Fig. 1 dargestellte axiale Ausgangsposition zurück gedrückt und hierbei über die Wendel und die dann sperrende Freilaufeinrichtung in Fortschaltrichtung SR verdreht. Das Prinzip einer solchen hydraulischen Umschaltung des Verteilers auf einen neuen Ausgang ist in verschiedenen Varianten gebräuchlich und daher an dieser Stelle nicht weiter erläutert. Details der in Fig. 1 dargestellten Fortschalteinrichtung sind für den Gedanken der vorliegenden Erfindung nicht weiter von Bedeutung.

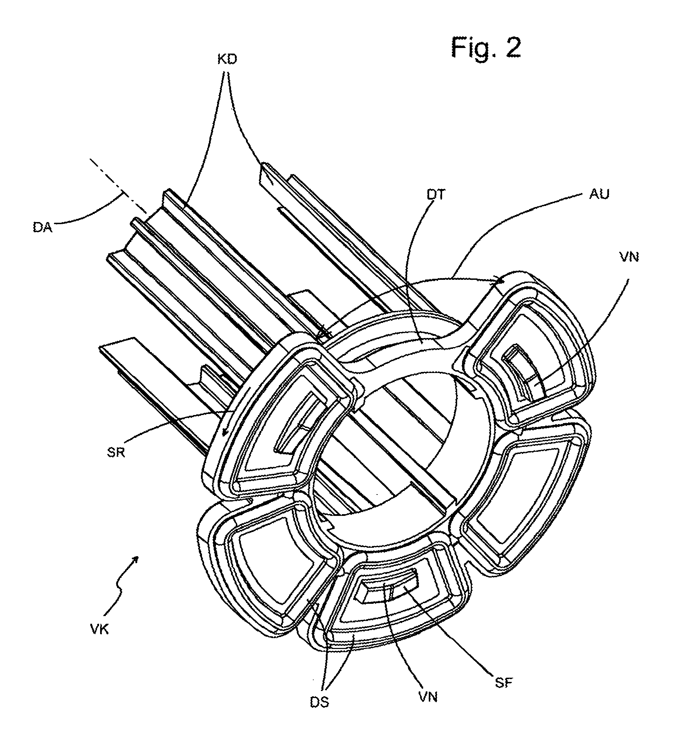

Fig. 2 zeigt eine vorteilhafte Ausführung eines Verteilerkörpers VK für einen solchen Wasserverteiler. Der Verteilerkörper VK weist einen scheibenförmigen Dichtteller DT auf, dessen Scheibenebene senkrecht zur Drehachse DA verläuft. Von dem Dichtteller DT in Richtung der Drehachse abstehend sind Koppelstrukturen KD vorgesehen, mittels welcher der Verteilerkörper drehfest, aber axial verschiebbar mit dem Kolben KO der Fortschalteinrichtung gekoppelt werden kann. Die Koppelstrukturen KD liegen in der Darstellung der Fig. 1 innerhalb des Kolbens KO. Die Koppelstrukturen KD bewirken durch Eingriff in komplementäre Gegenstrukturen im Kolben KO eine drehende Mitnahme des Verteilerkörpers VK bei einer Drehung des Kolbens KO um die Drehachse DA. Es kann auch eine Drehkupplung mit einem anderen Bauteil der Fortschalteinrichtung vorgesehen sein.

An der der Koppelstruktur KD in axialer Richtung abgewandten Unterseite des Dichttellers DT ist eine Dichtungsanordnung mit fünf Ringdichtungen angeordnet, welche jeweils in gleichen Winkelsegmenten um die Drehachse DA angeordnet sind. In einem weiteren Winkelsegment ist eine Aussparung AU in dem Dichtteller DT ausgebildet, wie auch bereits zu Fig. 1 dargestellt und erläutert.

Der Verteilerkörper mit Dichtteller DT und Koppelstrukturen KD ist vorteilhafterweise als Kunststoff-Spritzgusskörper hergestellt. Vorzugsweise ist die typischerweise aus einem gummielastischen Dichtmaterial bestehende Dichtungsanordnung in einem Zwei-Komponenten-Spritzgussverfahren einteilig mit dem härteren Kunststoff des Verteilerkörpers hergestellt.

An der Unterseite des Dichttellers DT sind axial vorspringende und axial über die Dichtungsanordnung DS hinaus ragende Verschiebenocken VN ausgeformt. Wenigstens zwei, vorzugsweise drei Verschiebenocken VN sind in Umfangsrichtung gleichmäßig verteilt um die Drehachse DA angeordnet. Die Verschiebenocken VN liegen in der dargestellten bevorzugten Ausführungsform innerhalb von Ringdichtungen der Dichtungsanordnung.

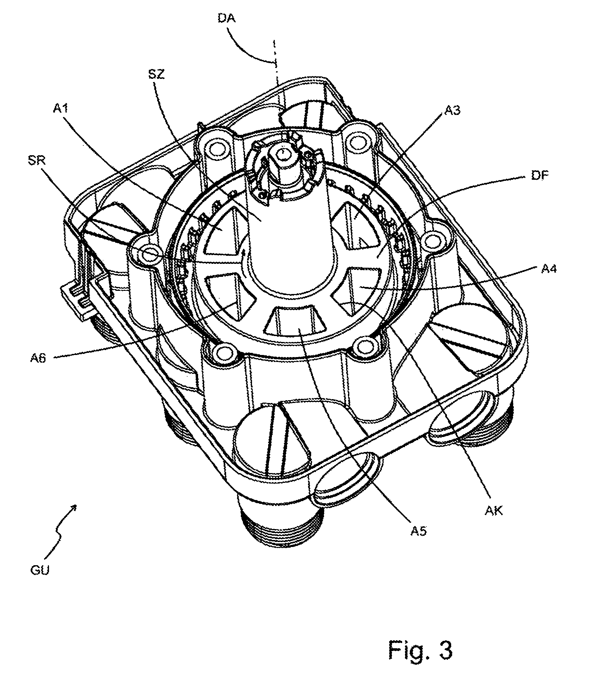

Fig. 3 zeigt in Ansicht von schräg oben ein Unterteil GU des Gehäuses eines Wasserverteilers mit Blick auf die Dichtfläche DF des Unterteils, welche die mehreren Wasserausgänge, von welchen A1 und A3 bis A6 sichtbar sind, umgibt. Der Wasserausgang A2 ist durch eine die Drehachse umgebende Säule SZ des Gehäuses verdeckt.

Die Wasserausgänge verlaufen im skizzierten Beispiel anfänglich von der Dichtfläche DF im wesentlichen parallel zur Drehachse DA nach unten und bilden Öffnungen in der Dichtfläche DF. Für den Wasserausgang A4 ist mit AK eine Kante einer solchen Öffnung bezeichnet, welche mit den zu Fig. 2 erläuterten Verschiebenocken bei der Verdrehung des Verteilerkörpers relativ zu dem Gehäuseteil zusammen wirkt.

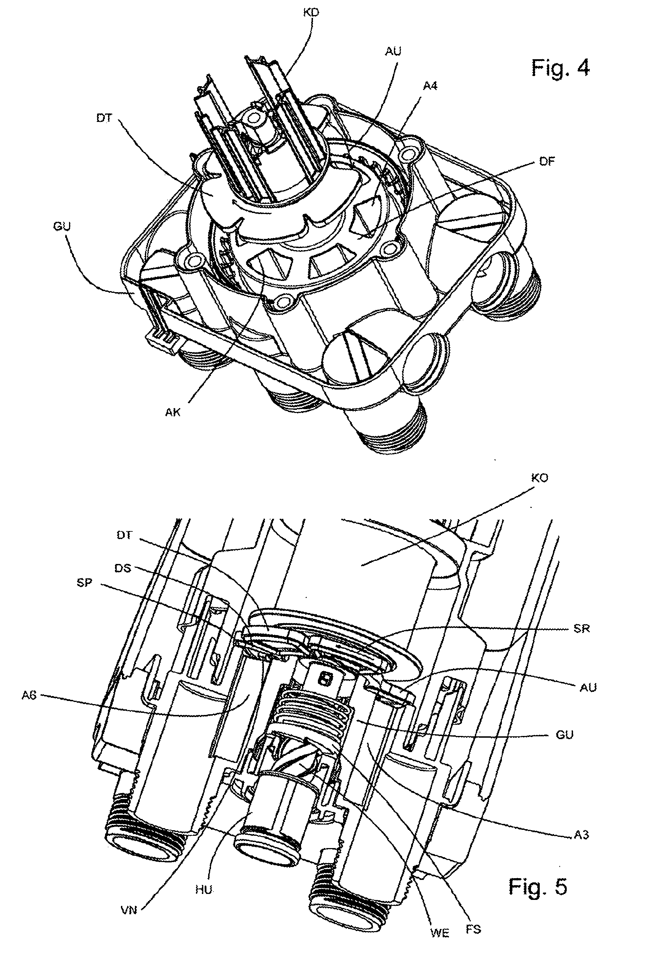

Fig. 4 zeigt eine Zwischenposition beim Aufsetzen des Verteilerkörpers VK auf das Unterteil GU des Gehäuses. Der Dichtteller umgibt die Säule SZ des Gehäuseunterteils ringförmig und ist über diese relativ zur Drehachse DA zentriert. Eine Ausrichtung in eine diskrete Betriebsstellung mit über einem der Wasserausgänge liegender Aussparung AU des Dichttellers erfolgt bei weiterem Zusammenbau über den Eingriff der Koppelstrukturen KD in Gegenstrukturen des Kolbens.

Fig. 5 zeigt einen Ausschnitt aus einer zu Fig. 1 ähnlichen Ansicht eines aufgeschnittenen Verteilers von schräg unten, wobei sich in der Darstellung nach Fig. 5 der Dichtteller in einer Zwischenposition eines Fortschaltschrittes um die Drehachse zwischen zwei diskreten Betriebsstellungen befindet. Die Drehrichtung SR bei der Fortschaltung ist durch einen Pfeil am Verteilerkörper dargestellt. In dieser Zwischenposition ist der Verteilerkörper durch die Verschiebenocken VN axial von der Dichtfläche DF weg verschoben, wobei sich ein geringer Spalt SP zwischen der Dichtungsanordnung DS und der Dichtfläche einstellt. Die Verschiebenocken VN laufen auf der Dichtfläche zwischen zwei in Umfangsrichtung benachbarten Ausgängen. Durch das Abheben der Dichtungsanordnung DS von der Dichtfläche DF wird zum einen die Reibung der Dichtungsanordnung an der Dichtfläche während des Fortschaltschritts vermindert und über einen Teilabschnitt der Fortschaltbewegung ganz aufgehoben, zum anderen kann durch den Spalt SP zwischen Dichtungsanordnung und Dichtfläche des unteren Gehäuseteils Wasser durchtreten und Schmutzpartikel wegspülen. Eine Fortschaltung kann in einem Schritt über ein oder auch mehrere Winkelinkremente erfolgen.

Wenn der Verteilerkörper eine der diskreten Betriebsstellungen einnimmt, weisen die Verschiebenocken VN bei dem skizzierten Beispiel in Ausgangsöffnungen der Wasserausgänge, in Fig. 1 beispielsweise in den Ausgang A6. Die Verschiebenocken weisen vorteilhafterweise in Fortschaltrichtung SR voreilend Schrägflächen SF auf, welche als Anlauframpen bei Beginn der Fortschaltbewegung sich an Kanten AK der Öffnungen der jeweiligen Ausgänge legen und bei weiterer Verschiebung den Verteilerkörper axial von dem Unterteil GU des Gehäuses weg verschieben. Die Verschiebung des Verteilerkörpers von dem Gehäuseunterteil weg kann allein entgegen der Gewichtskraft des Verteilerkörpers erfolgen. In der in Fig. 5 dargestellten Zwischenstellung liegen die Verteilernocken auf der Dichtfläche zwischen benachbarten Wasserausgängen und gleiten auf dieser in Fortschaltrichtung SR. Die Auflagefläche zwischen Verteilernocken VN und Dichtfläche ist dabei gering und die aneinander gleitenden Kontaktflächen können reibungsarm ausgeführt sein.

Bei Erreichen des nächsten diskreten Betriebszustands in Fortschaltrichtung fällt der Dichtungsteller wieder mit der Dichtungsanordnung auf die Dichtfläche und bei einem nachfolgendem Bewässerungsvorgang wird der Dichtteller mit dem dann im Innenraum WR vorliegenden höheren Wasserdruck erhöhten Kraft gegen die Dichtfläche gedrückt und die nicht aktuellen Ausgänge dadurch effektiv abgedichtet.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Wasserverteiler mit mehreren Ausgängen (A1 bis A6) und mit einem um eine Drehachse (DA) relativ zu einem Gehäuse (GE) drehbaren und mittels einer Fortschalteinrichtung (KO, WE) schrittweise in diskreten Betriebswinkelstellungen auf jeweils einen der mehreren Ausgänge ausrichtbaren Verteilerkörper (VK, DT), welcher die jeweils aktuell nicht ausgewählten Ausgänge von einem wasserführenden Innenraum (WR) absperrt, wofür zwischen Verteilerkörper (VK, DT) und einer die Ausgänge begrenzend umgebenden Gehäusefläche (DF) als Gegenfläche eine Dichtungsanordnung (DS) vorgesehen ist, wobei der Verteilerkörper (VK, DT) der Gegenfläche im wesentlichen bezüglich der Drehachse (DA) axial gegenüberstehend angeordnet ist und in den diskreten Betriebsstellungen eine erste axiale Relativposition zu der Gegenfläche einnimmt und wobei Verschiebemittel (VN) vorgesehen sind, welche in Bewegungsabschnitten der Fortschaltung zwischen in Fortschaltrichtung aufeinander folgenden Betriebswinkelstellungen den Verteilerkörper in eine zweite axiale Relativposition mit gegenüber der ersten Relativposition größerem Abstand zu der Gegenfläche verschieben,
**dadurch gekennzeichnet,**
**dass** der Verteilerkörper (VK, DT) drehfest aber axial verschiebbar mit der Fortschalteinrichtung (KO, WE) gekoppelt ist,
**dass** die Verschiebemittel (VN) und die Dichtungsanordnung (DS) an dem relativ zum Gehäuse drehbaren Verteilerkörper (VK, DT) angeordnet sind,
so dass die Verschiebemittel (VN) mit der Gegenfläche am Gehäuse für die axiale Relatiwerschiebung zusammenwirken.

2. Wasserverteiler nach Anspruch 1, **dadurch gekennzeichnet, dass** die Verschiebemittel (VN) radial von dem Bereich der Dichtungsanordnung (DS) getrennt liegen.

3. Wasserverteiler nach Anspruch 1, **dadurch gekennzeichnet, dass** die Verschiebemittel (VN) radial im Bereich der Ausgänge liegen.

4. Wasserverteiler nach einem der Ansprüche 1 bis 3, **dadurch gekennzeichnet, dass** die Verschiebemittel (VN) axiale Vorsprünge an dem Verteilerkörper (DT) enthalten.

5. Wasserverteiler nach Anspruch 3 und 4, **dadurch gekennzeichnet, dass** die Vorsprünge (VN) in den diskreten Betriebsstellungen in die Ausgänge weisen.

6. Wasserverteiler nach Anspruch 5, **dadurch gekennzeichnet, dass** die Vorsprünge (VN, SF) bei der Fortschaltbewegung an Kanten (AK) von Öffnungen der Ausgänge anliegen und über diese hinweg gleiten.

7. Wasserverteiler nach einem der Ansprüche 1 bis 6, **dadurch gekennzeichnet, dass** die Dichtungsanordnung (DS) an dem Verteilerkörper (DT) angeordnet ist.

8. Wasserverteiler nach Anspruch 7, **dadurch gekennzeichnet, dass** die Dichtungsanordnung (DS) und der Verteilerkörper (VK, DT) als ein einheitliches Bauteil aus einem Zwei-Komponenten-Spritzgussverfahren vorliegen.

9. Wasserverteiler nach einem der Ansprüche 1 bis 8, **dadurch gekennzeichnet, dass** die Verschiebemittel (VN) ein vollständiges Abheben der Dichtungsanordnung (DS) von der Gegenfläche (DF) bewirken.

10. Wasserverteiler nach einem der Ansprüche 1 bis 9, **dadurch gekennzeichnet, dass** die Verschiebemittel (VN) mehrere gleichmäßig in Umfangsrichtung verteilt angeordnete Teilstrukturen enthalten.

11. Wasserverteiler nach einem der Ansprüche 1 bis 10, **dadurch gekennzeichnet, dass** der Verteilerkörper einen scheibenförmigen Dichtteller enthält, welcher im wesentlichen in einer Ebene senkrecht zur Drehachse liegt.

## Claims

1. Water distributor having several outputs (A1 to A6) and having a distributor body (VK, DT), which is rotatable about an axis of rotation (DA) in relation to a housing (GE), is alignable to each one of the several outputs in a stepwise manner in discrete angular operating positions by means of a switching device (KO, WE) and blocks off the outputs from a water bearing interior (WR) which are not currently selected in each case, for which purpose a sealing arrangement (DS) is provided as a counter surface between the distributor body (VK, DT) and a housing surface (DF) which surrounds the outputs in a defining manner, wherein the distributor body (VK, DT) is arranged substantially axially opposite the counter surface with reference to the axis of rotation (DA) and in the discrete operating positions assumes a first axial relative position with respect to the counter surface and wherein displacement means (VN) are provided which, in movement portions of the switching process between angular operating positions following one after the other in the switching direction, displace the distributor body into a second axial relative position at a greater spacing to the counter surface compared to the first relative position,
**characterized in that** the distributor body (VK, DT) is coupled non-rotatably but axially displaceably with the switching device (KO, WE),
**in that** the displacement means (VN) and the sealing arrangement (DS) are arranged on the distributor body (VK, DT) which is rotatable in relation to the housing,
such that the displacement means (VN) interact with the counter surface on the housing for the axial relative displacement.

2. Water distributor according to Claim 1, **characterized in that** the displacement means (VN) are separated radially from the region of the sealing arrangement (DS).

3. Water distributor according to Claim 1, **characterized in that** the displacement means (VN) are located radially in the region of the outputs.

4. Water distributor according to one of Claims 1 to 3, **characterized in that** the displacement means (VN) include axial projections on the distributor body (DT).

5. Water distributor according to Claims 3 and 4, **characterized in that** the projections (VN) point into the outputs in the discrete operating positions.

6. Water distributor according to Claim 5, **characterized in that** during the switching movement, the projections (VN, SF) abut against edges (AK) of openings of the outputs and slide over said edges.

7. Water distributor according to one of Claims 1 to 6, **characterized in that** the sealing arrangement (DS) is arranged on the distributor body (DT).

8. Water distributor according to Claim 7, **characterized in that** the sealing arrangement (DS) and the distributor body (VK, DT) are present as a homogeneous component produced using a two-component injection moulding method.

9. Water distributor according to one of Claims 1 to 8, **characterized in that** the displacement means (VN) cause the sealing arrangement (DS) to lift off the counter surface (DF) completely.

10. Water distributor according to one of Claims 1 to 9, **characterized in that** the displacement means (VN) include several part structures which are arranged uniformly distributed in the circumferential direction.

11. Water distributor according to one of Claims 1 to 10, **characterized in that** the distributor body includes a disc-shaped sealing plate which is located substantially in a plane at right angles to the axis of rotation.

## Revendications

1. Répartiteur d'eau comprenant plusieurs sorties (A1 à A6) et comprenant un corps de répartition (VK, DT) pouvant tourner autour d'un axe de rotation (DA) par rapport à un boîtier (GE) et pouvant être aligné sur une sortie respective des plusieurs sorties graduellement dans des positions angulaires distinctes de fonctionnement au moyen d'un dispositif de commutation (KO, WE), lequel corps de répartition bloque les sorties respectives actuellement non sélectionnées par rapport à un espace intérieur de guidage d'eau (WR), un ensemble d'étanchéité (DS) étant à cette fin prévu en tant que surface conjuguée entre le corps de répartition (VK, DT) et une surface de boîtier (DF) entourant les sorties de manière à les délimiter, le corps de répartition (VK, DT) étant disposé essentiellement axialement en regard de la surface conjuguée par rapport à l'axe de rotation (DA) et adoptant dans les positions de fonctionnement distinctes une première position relative axiale par rapport à la surface conjuguée, et des moyens de déplacement (VN) étant prévus, lesquels, dans des phases de mouvement de la commutation entre des positions angulaires de fonctionnement successives dans la direction de commutation, déplacent le corps de répartition dans une deuxième position relative axiale présentant une plus grande distance à la surface conjuguée par rapport à la première position relative,
**caractérisé**
**en ce que** le corps de répartition (VK, DT) est accouplé au dispositif de commutation (KO, WE) de manière solidaire en rotation mais axialement déplaçable,
**en ce que** les moyens de déplacement (VN) et l'ensemble d'étanchéité (DS) sont disposés sur le corps de répartition (VK, DT) pouvant tourner par rapport au boîtier, de telle sorte que les moyens de déplacement (VN) coopèrent avec la surface conjuguée sur le boîtier pour le déplacement relatif axial.

2. Répartiteur d'eau selon la revendication 1, **caractérisé en ce que** les moyens de déplacement (VN) se situent de manière séparée radialement de la région de l'ensemble d'étanchéité (DS).

3. Répartiteur d'eau selon la revendication 1, **caractérisé en ce que** les moyens de déplacement (VN) se situent radialement dans la région des sorties.

4. Répartiteur d'eau selon l'une quelconque des revendications 1 à 3, **caractérisé en ce que** les moyens de déplacement (VN) comportent des saillies axiales sur le corps de répartition (DT).

5. Répartiteur d'eau selon les revendications 3 et 4, **caractérisé en ce que** les saillies (VN) sont tournées vers les sorties dans les positions de fonctionnement distinctes.

6. Répartiteur d'eau selon la revendication 5, **caractérisé en ce que**, lors du déplacement de commutation, les saillies (VN, SF) s'appliquent contre des arêtes (AK) d'ouvertures des sorties et glissent par-dessus celles-ci.

7. Répartiteur d'eau selon l'une quelconque des revendications 1 à 6, **caractérisé en ce que** l'ensemble d'étanchéité (DS) est disposé sur le corps de répartition (DT).

8. Répartiteur d'eau selon la revendication 7, **caractérisé en ce que** l'ensemble d' étanchéité (DS) et le corps de répartition (VK, DT) sont présents sous la forme d'un composant uniforme produit à l'aide d'un procédé de moulage par injection à deux composants.

9. Répartiteur d'eau selon l'une quelconque des revendications 1 à 8, **caractérisé en ce que** les moyens de déplacement (VN) provoquent un soulèvement complet de l'ensemble d'étanchéité (DS) de la surface conjuguée (DF).

10. Répartiteur d'eau selon l'une quelconque des revendications 1 à 9, **caractérisé en ce que** les moyens de déplacement (VN) comportent plusieurs structures partielles disposées de manière répartie régulièrement dans la direction périphérique.

11. Répartiteur d'eau selon l'une quelconque des revendications 1 à 10, **caractérisé en ce que** le corps de répartition comporte une plaque d'étanchéité en forme de disque, laquelle se situe essentiellement dans un plan normal à l'axe de rotation.
